# EUROPÄISCHE PATENTSCHRIFT

(11) **EP 3 433 043 B1**
(45) Veröffentlichungstag und Bekanntmachung des Hinweises auf die Patenterteilung: **07.05.2025**
(21) Anmeldenummer: 17713602.5
(22) Anmeldetag: 21.03.2017
(51) Int. Cl.: B23D 77/00, B23C 5/28, B23B 31/00

(54) **SPANABHEBENDES WERKZEUG**
CUTTING TOOL
OUTIL D'USINAGE PAR ENLÈVEMENT DE COPEAUX

(30) Priorität: 21.03.2016 DE 102016105210
(43) Veröffentlichungstag der Anmeldung: 30.01.2019
(73) Patentinhaber: CERATIZIT Besigheim GmbH, 74354 Besigheim (DE)
(72) Erfinder: MAYER, Manuel, 75428 Illingen (DE); KRAMER, Niklas, 74321 Bietigheim-Bissingen (DE)
(74) Vertreter: Pfiz, Thomas
(86) Internationale Anmeldenummer: PCT/EP2017/056725
(87) Internationale Veröffentlichungsnummer: WO 2017/162688

(56) Entgegenhaltungen:
- EP-A1- 2 520 396
- DE-A1- 102006 028 373
- DE-A1- 102012 022 439
- DE-A1- 102013 015 252
- FR-A1- 2 736 853
- US-A1- 2007 104 549
- US-A1- 2009 053 001

## Beschreibung

### Beschreibung

Die Erfindung betrifft ein spanabhebendes Werkzeug, insbesondere Reibwerkzeug zur Feinbearbeitung einer Bohrung oder Fräswerkzeug, gemäß dem Oberbegriff des Patentanspruchs 1.

Reiben ist ein spanabhebendes Bearbeitungsverfahren mit geometrisch bestimmter Schneide, wobei im Gegensatz zum Voll- oder Aufbohren nur mit kleinen Spanungsquerschnitten in stets vorbearbeiteten Bohrungen gearbeitet wird. Die abzuspanenden Aufmaße bzw. Reibzugaben im Durchmesser liegen typischerweise im Bereich von 0,1 bis 0,5 mm. Ein Reibwerkzeug soll eine hohe Bohrungsqualität über viele Bauteile gewährleisten, mit möglichst geringen Toleranzen im Durchmesser sowie in der Form und Lage der Bohrung und deren Rauheit. In diesem Zusammenhang ist es aus der WO2015/055364 bekannt, einen Schneidkopf über eine unlösbare Lötverbindung an einem Grundkörper zu fixieren. Die Schneiden werden dann in einem nachfolgenden Fertigungsschritt auf das gewünschte Maß eingeschliffen. Um das Kühlmittel in den Bereich der Schneiden umzulenken, ist ein Verteiler in einen Kühlmittelkanal des Schneidkopfs eingesteckt und mittels einer in den vorderen Schaftabschnitt des Grundkörpers eingeschraubten Klemmschraube fixiert. In dieser Konfiguration spielen verschiedene Toleranzen für das Spaltmaß des Kühlmitteldurchlasses unter dem Verteiler eine Rolle, insbesondere die Dicke der Lötverbindung, die Höhe des Schneidkopfs, die Stegbreite des Verteilers und die Position des Innengewindes im Grundkörper. Dadurch weist unter Umständen der Kühlmittelverteilspalt nicht die erforderliche Dimension auf, um eine hinreichende Versorgung im Bereich der Schneiden zu gewährleisten.

Um die Performance von Reibwerkzeugen zu steigern, hat es sich auch bewährt, den Schneidkopf als Sinterrohling aus Hartmetall auszubilden, der durch Drehbearbeitung und Schleifen in gewissem Umfang nachbearbeitet werden kann. Allerdings ist hier kein Bohren von Kühlmittelkanälen möglich.

Aus der DE 10 2013 015 252 A1 ist eine Kühlmittelzufuhr an einem Wälzschälwerkzeug bekannt, bei welchem ein Schälradhalter eine zentrale Bohrung aufweist, in die eine Hohlschraube als Halterung eines Deckels eingesetzt ist, wobei der Deckel an seinem äußeren Umfang auf den Kanten der Verzahnung aufliegt.

Ausgehend hiervon liegt der Erfindung die Aufgabe zugrunde, die im Stand der Technik bekannten Werkzeuge weiter zu verbessern und die Kühlschmiermittelzuführung mit geringem Fertigungsaufwand sicherzustellen.

Zur Lösung dieser Aufgabe wird die in im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, bei einem gesinterten Schneidkopf direkt in der Erstform die Formelemente für eine definierte Abstandhaltung zu schaffen. Dementsprechend wird erfindungsgemäß vorgeschlagen, dass an einer Stütz- bzw. Leitfläche des Schneidkopfs mehrere abstehende Abstandshalter zur Freihaltung eines Spaltes gegenüber dem Kühlschmierstoffverteiler als Urformelemente angesintert sind, wobei der Kühlschmierstoffverteiler auf den Abstandshaltern aufsitzend gehalten ist, so dass der durch die Abstandhalter definierte Spalt zwischen der Stützfläche und dem Kühlschmierstoffverteiler für die Durchleitung von Kühlschmierstoff freibleibt, wobei die Abstandshalter als zu einer von der Stützfläche abgewandten freien Lagerstelle zulaufender geometrischer Formkörper ausgebildet sind. Damit ist es möglich, unter Verzicht auf zusätzliche toleranzbehaftete Hilfsmittel geeignete Abstandshalter in einem integrierten Formprozess zu schaffen, ohne dass eine Nachbearbeitung erforderlich wäre. Zudem kann damit ein erforderlicher Abstand zur Schaffung eines Zwischenraums genau dort definiert werden, wo dieser Abstand einzuhalten ist, insbesondere um Kühlschmierstoff effektiv durchzuleiten. Der Herstellungsaufwand für die Gestaltung der Pressform ist weitgehend stückzahlunabhängig und wird durch die zusätzlichen Abstandhalter nicht nennenswert beeinflusst. Ein weiterer Vorteil besteht darin, dass die übrigen Werkzeugteile mit geringerem Aufwand produziert werden können, weil dort durch die Vermeidung von Abstandsverkettungen keine extremen Toleranzen mehr eingehalten werden müssen. Erfindungsgemäß ist der Kühlschmierstoffverteiler auf den Abstandshaltern aufsitzend gehalten, so dass der durch die Abstandhalter definierte Spalt zwischen der Stützfläche und dem Kühlschmierstoffverteiler für die Durchleitung von Kühlschmierstoff freibleibt.

Eine weitere besonders bevorzugte Ausführung sieht vor, dass der Kühlschmierstoffverteiler durch eine Schraubverbindung ohne feste Verbindung zu dem Grundkörper klemmend auf den Abstandshaltern fixiert ist. Auf diese Weise wird der erforderliche Abstand direkt an dem Schneidkopf festgelegt, ohne dass aufwändige mechanische Konstruktionen an dem Grundkörper erforderlich wären. Damit lassen sich auch kleinere Bauräume bzw. Kopfdurchmesser realisieren.

Eine besonders einfache Ausführung lässt sich dadurch verwirklichen, dass der Kühlschmierstoffverteiler in eine gegen ein Widerlager des Schneidkopfs bewegliche Zentrierhülse eingeschraubt ist.

Eine weitere konstruktive Verbesserung sieht vor, dass die Zentrierhülse in einer Axialbohrung des Grundkörpers geführt ist und als Teil der Kühlschmierstoffzuführung mit Durchtrittsöffnungen für Kühlschmierstoff versehen ist.

Um Störkonturen insbesondere für das Bearbeiten von Sacklochbohrungen zu vermeiden, ist es vorteilhaft, wenn die Leitfläche gegenüber einer vorderen Stirnpartie des Schneidkopfes zu dem Grundkörper hin axial zurückversetzt ist, wobei der Kühlschmierstoffverteiler innerhalb des Schneidkopfs gelagert ist.

Zur gezielten Beaufschlagung der Schneiden mit Kühlschmierstoff ist es von Vorteil, wenn der Schneidkopf mit jeweils einer der mindestens einen Schneide zugeordneten, einen radialen Durchlass für den Kühlschmierstoff im Bereich einer an die Schneide anschließenden Spannut bildenden Ausnehmung versehen ist.

Eine radiale Umlenkung des Kühlschmierstoffs im Bereich des Schneidkopfs lässt sich vorteilhaft dadurch bewerkstelligen, dass der Kühlschmierstoffverteiler pilzförmiges Drehteil aus Metall, insbesondere Stahl gebildet ist.

Eine weitere vorteilhafte Ausgestaltung liegt darin, dass Abstandshalter an einer dem Grundkörper zugewandten Seite des Schneidkopfs abstehen, wobei der durch diese Abstandshalter freigehaltene Spalt zwischen einer weiteren Stützfläche und dem Grundkörper einen Lotspalt für eine Lötverbindung des Schneidkopfs mit dem Grundkörper bildet.

Um eine kippfreie Zentrierung sicherzustellen, ist es vorteilhaft, wenn mindestens drei Abstandshalter in Umfangsrichtung um die Längsmittelachse verteilt angeordnet sind.

Je nach Werkzeugkonfiguration kann es für einen unbehinderten Kühlschmierstofffluss vorteilhaft sein, wenn die Abstandshalter in Umfangsrichtung um die Längsmittelachse gesehen in gleichem oder in unregelmäßigem Winkelabstand voneinander angeordnet sind.

Zur Definierung geeigneter Spaltmaße ist es von Vorteil, wenn die Abstandshalter eine Höhe im Bereich von 0,1 bis 2 mm, vorzugsweise 0,2 bis 1 mm aufweisen.

Im Folgenden wird die Erfindung anhand der in der Zeichnung schematisch dargestellten Ausführungsbeispiele näher erläutert. Es zeigen:
- Fig. 1: ein Reibwerkzeug mit einem gesinterten Schneidkopf und darin eingesetztem Kühlschmierstoffverteiler in perspektivischer Darstellung;
- Fig. 2: den Schneidkopf ohne Kühlschmierstoffverteiler in vergrößerter Darstellung;
- Fig. 3: das Reibwerkzeug nach Fig. 1 in abgebrochenem Axialschnitt.

Das in der Zeichnung dargestellte Reibwerkzeug 10 lässt sich für die Feinbearbeitung einer vorgefertigten Bohrung in einem Werkstück mittels einer Werkzeugmaschine um seine Werkzeugachse bzw. Längsmittelachse 12 rotierend antreiben und dabei axial vorschieben, um eine Reibzugabe spanabhebend abzutragen und so eine passgenaue Bohrung mit hoher Oberflächengüte zu erzeugen. Die Werkzeugachse kann jedoch auch eine Rotationsachse für ein Werkstück sein, das zur Bearbeitung mit einem stillstehenden Maschinenwerkzeug um die Werkzeugachse rotierend bewegt wird.

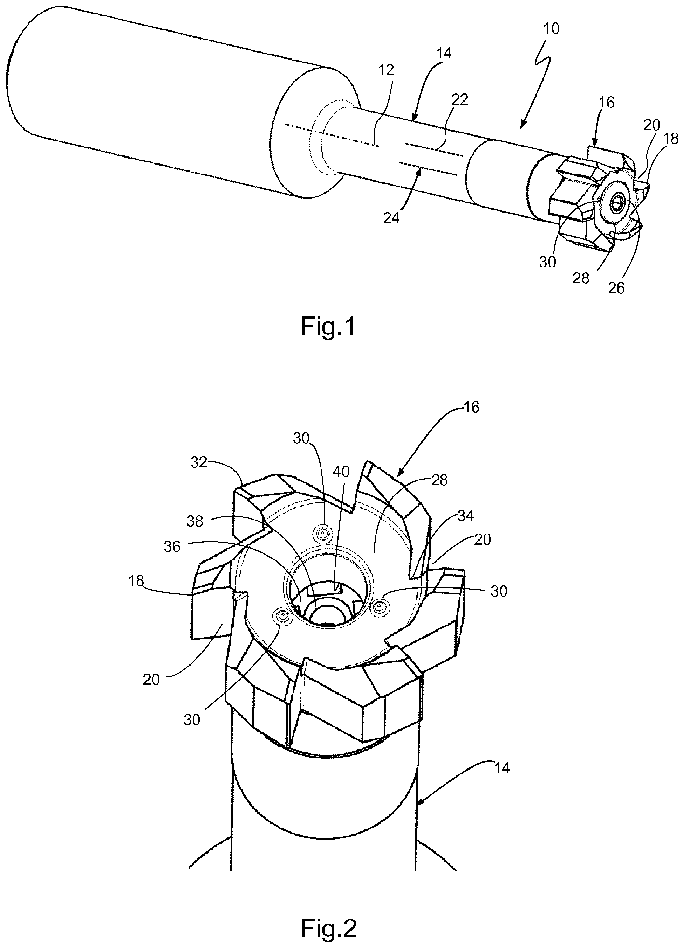

Wie in Fig. 1 gezeigt, weist das Reibwerkzeug 10 einen abgestuft zylindrischen Grundkörper 14 auf, der an seinem hinteren Ende in den Werkzeughalter einer Maschine einspannbar ist und an seinem vorderen Ende einen Schneidkopf 16 trägt. Der Schneidkopf 16 ist als gesintertes Pressstück aus Hartmetall oder Cermet gebildet und über seinen Umfang verteilt mit mehreren geschliffenen Schneiden 18 versehen, denen jeweils eine Spannut 20 zugeordnet ist. Durch den Grundkörper 14 erstreckt sich in dessen Längsrichtung ein Kanal 22 als Teil einer maschinenseitig gespeisten Kühlschmierstoffzuführung 24, die auslassseitig einen in den Schneidkopf 16 eingesetzten Kühlschmierstoffverteiler 26 zur radialen Umlenkung von Kühlschmierstoff in den Bereich der Schneiden 18 und Spannuten 20 umfasst. Zur Freihaltung eines definierten Durchlassspalts zwischen dem einer Leit- bzw. Stützfläche 28 des Schneidkopfs 16 und dem Kühlschmierstoffverteiler 26 sind an der Stützfläche 28 mehrere erhaben abstehende Abstandshalter 30 angeordnet, die als Urformelemente bereits beim Sintern angeformt werden.

Wie aus Fig. 2 ersichtlich, ist die Stützfläche 28 durch eine axial nach vorne weisende Ringfläche gebildet, die gegenüber einer vorderen Stirnpartie 32 des Schneidkopfs 16 zurückversetzt ist, so dass der Kühlschmierstoffverteiler 26 ohne axialen Überstand in dem Schneidkopf 16 aufgenommen werden kann. Um den Kühlschmierstoff von der Stützfläche 28 weg gezielt in den Bereich der Schneiden 18 auszuleiten, ist der Schneidkopf 16 mit mehreren jeweils in einer Spannut 20 mündenden Ausnehmungen 34 versehen. Diese Ausnehmungen 34 werden nach dem Sintern des Schneidkopfs 16 bei dessen Ausnutung eingebracht, wodurch eine flexible Zuordnung je nach Zahl der eingeschliffenen Schneiden 18 möglich ist.

Bei der gezeigten Ausführungsform sind drei Abstandshalter 30 in Umfangsrichtung um die Längsmittelachse 12 herum verteilt angeordnet. Zweckmäßig weisen die Abstandshalter 30 eine Höhe im Bereich von 0,2 bis 1 mm auf. Dabei besitzen die Abstandshalter 30 eine zu ihrer Abstützstelle zulaufende, beispielsweise ballige geometrische Form.

Grundsätzlich ist es auch möglich, dass die Teilung bzw. der Winkelabstand der Abstandshalter 30 voneinander an die Zahl der Schneiden 18 angepasst ist. Je nach Konfiguration der Schneiden 18 ist es auch denkbar, dass die Abstandshalter 30 mit unregelmäßiger Teilung angeordnet sind, so dass der Kühlmittelfluss radial zu den Schneiden 18 - deren Zahl bei ansonsten gleichbleibenden Werkzeugdimensionen anwendungsabhängig variieren kann - nicht behindert wird.

Zur Fixierung des Kühlschmierstoffverteilers 26 ist eine Zentrierhülse 36 vorgesehen, die in dem Grundkörper 14 begrenzt axialbeweglich gelagert ist. Die Zentrierhülse 36 besitzt ein Innengewinde 38 und ist mantelseitig mit Axialnuten 40 zur Durchleitung von Kühlschmierstoff versehen.

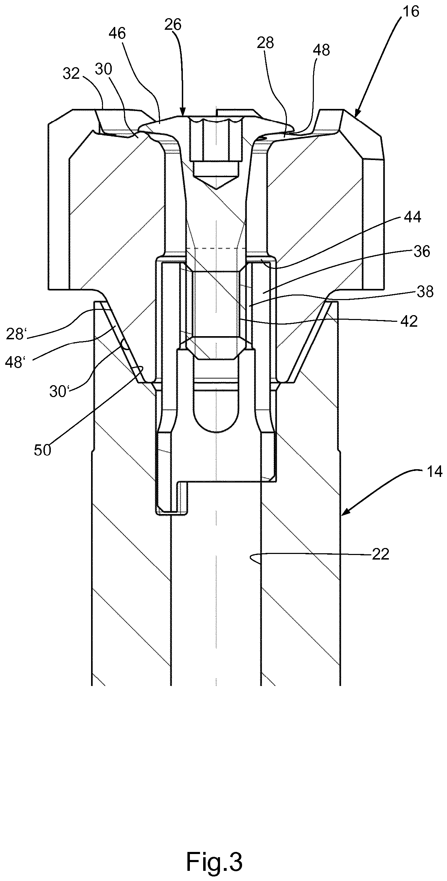

Wie am besten aus Fig. 3 ersichtlich, lässt sich der pilzförmige Kühlschmierstoffverteiler 26 mit einem Gewindefortsatz 42 in das Innengewinde 38 der Zentrierhülse 36 einschrauben. Hierbei wird die Zentrierhülse 36 gegen eine Axialschulter 44 des Schneidkopfs 16 gezogen, während der Kühlschmierstoffverteiler 26 mit seinem radial abstehenden Kopfstück 46 fest auf den Abstandshaltern 30 aufsitzt. Die Klemmverbindung wird somit ohne feste Verbindung zu dem Grundkörper 14 realisiert. Dadurch bleibt ein definierter Spalt 48 als Kühlschmierstoffdurchlass zwischen der Stützfläche 28 des gesinterten Schneidkopfs 16 und dem Kopfstück 46 des als Drehteil aus Metall gefertigten Kühlschmierstoffverteilers 26 frei, ohne dass Verbindungstoleranzen zu dem Grundkörper 14 eine Rolle spielen.

Grundsätzlich ist es auch möglich, dass Abstandshalter 30' an einer dem Grundkörper 14 zugewandten Stützfläche des Schneidkopfs 16 angesintert werden, um dort ein definiertes Spaltmaß sicherzustellen. Beispielsweise können die Abstandshalter 30' auf einer rückseitigen Kegelfläche 28' des Schneidkörpers 16 abstehen, um gegenüber einer stirnseitigen Konusfläche 50 des Grundkörpers 14 einen Lotspalt 48' für eine Lötverbindung freizuhalten.

Außerhalb des Rahmens der Erfindung ist es grundsätzlich denkbar, dass anstelle erhabener Abstandshalter 30 geeignete Vertiefungen in die Stützfläche 28 des Schneidkopfs 16 eingeformt werden, um so einen radialen Durchlass für Kühlschmierstoff zu schaffen. Der Kühlschmierstoffverteiler 26 kann dabei mit seinem Kopfstück 46 direkt auf der Stützfläche 28 aufsitzen.

## Patentansprüche

1. Spanabhebendes Werkzeug, insbesondere Reibwerkzeug zur Feinbearbeitung einer Bohrung oder Fräswerkzeug, mit einem eine Längsmittelachse (12) aufweisenden, in einen Werkzeughalter einspannbaren Grundkörper (14), einem an dem freien Ende des Grundkörpers (14) angefügten, als ein mit mindestens einer Schneide (18) versehenes Sinterstück urgeformten Schneidkopf (16), und einer axial durch den Grundkörper (14) hindurchgeführten Kühlschmierstoffzuführung (24), die einen in den Schneidkopf (16) eingesetzten Kühlschmierstoffverteiler (26) zur Umlenkung von Kühlschmierstoff in den Bereich der mindestens einen Schneide (18) aufweist, **dadurch gekennzeichnet, dass** an einer Stützfläche (28) des Schneidkopfs (16) mehrere abstehende Abstandshalter (30, 30') zur Freihaltung eines Spaltes gegenüber dem Kühlschmierstoffverteiler (26) als Urformelemente angesintert sind, wobei der Kühlschmierstoffverteiler (26) auf den Abstandshaltern (30,30') aufsitzend gehalten ist, so dass der durch die Abstandhalter definierte Spalt (48) zwischen der Stützfläche (28) und dem Kühlschmierstoffverteiler (26) für die Durchleitung von Kühlschmierstoff freibleibt, wobei die Abstandshalter (30,30') als ballig, kegelig, keilförmig oder bogenförmig geformter, zu einer von der Stützfläche (28) abgewandten freien Lagerstelle zulaufender geometrischer Formkörper ausgebildet sind.

2. Werkzeug nach Anspruch 1, **dadurch gekennzeichnet, dass** der Kühlschmierstoffverteiler (26) durch eine Schraubverbindung ohne feste Verbindung zu dem Grundkörper (14) klemmend auf den Abstandshaltern (30) fixiert ist.

3. Werkzeug nach Anspruch 1 oder 2, **dadurch gekennzeichnet, dass** der Kühlschmierstoffverteiler (26) in eine gegen ein Widerlager (44) des Schneidkopfs (16) bewegliche Zentrierhülse (36) eingeschraubt ist.

4. Werkzeug nach Anspruch 3, **dadurch gekennzeichnet, dass** die Zentrierhülse (36) in einer Axialbohrung des Grundkörpers (14) geführt ist und als Teil der Kühlschmierstoffzuführung (24) mit Durchtrittsöffnungen (40) für Kühlschmierstoff versehen ist.

5. Werkzeug nach einem der Ansprüche 1 bis 4, **dadurch gekennzeichnet, dass** die Stützfläche (28) gegenüber einer vorderen Stirnpartie (32) des Schneidkopfes zu dem Grundkörper (14) hin axial zurückversetzt ist, wobei der Kühlschmierstoffverteiler (26) innerhalb des Schneidkopfs (16) gelagert ist.

6. Werkzeug nach einem der Ansprüche 1 bis 5, **dadurch gekennzeichnet, dass** der Schneidkopf (16) mit jeweils einer der mindestens einen Schneide (18) zugeordneten, einen radialen Durchlass für den Kühlschmierstoff im Bereich einer an die Schneide (18) anschließenden Spannut (20) bildenden Ausnehmung (34) versehen ist.

7. Werkzeug nach einem der Ansprüche 1 bis 6, **dadurch gekennzeichnet, dass** der Kühlschmierstoffverteiler (26) pilzförmiges Drehteil aus Metall, insbesondere Stahl gebildet ist.

8. Werkzeug nach einem der Ansprüche 1 bis 7, **dadurch gekennzeichnet, dass** an einer weiteren Stützfläche (28') des Schneidkopfs (16) mehrere abstehende Abstandshalter (30') zur Freihaltung eines Spaltes gegenüber dem Grundkörper (14) als Urformelemente angesintert sind.

9. Werkzeug nach Anspruch 8, **dadurch gekennzeichnet, dass** die an der weiteren Stützfläche (28') abstehenden Abstandshalter (30') an einer dem Grundkörper (14) zugewandten Seite des Schneidkopfs (16) abstehen, wobei der durch die Abstandhalter (30') freigehaltene Spalt (48') einen Lotspalt für eine Lötverbindung mit dem Grundkörper (14) bildet.

10. Werkzeug nach einem der Ansprüche 1 bis 9, **dadurch gekennzeichnet, dass** mindestens drei Abstandshalter (30, 30') in Umfangsrichtung um die Längsmittelachse (12) verteilt angeordnet sind.

11. Werkzeug nach einem der Ansprüche 1 bis 10, **dadurch gekennzeichnet, dass** die Abstandshalter (30, 30') in Umfangsrichtung um die Längsmittelachse (12) gesehen in gleichem oder in unregelmäßigem Winkelabstand voneinander angeordnet sind.

12. Werkzeug nach einem der Ansprüche 1 bis 11, **dadurch gekennzeichnet, dass** die Abstandshalter (30, 30') eine Höhe im Bereich von 0,1 bis 2 mm, vorzugsweise 0,2 bis 1 mm aufweisen.

## Claims

1. Machining tool, in particular a reaming tool for precision machining of a hole or a milling tool, comprising a main body (14) which has a longitudinal central axis (12) and can be clamped in a tool holder, a cutting head (16) which is attached to the free end of the main body (14) and is formed, by primary shaping, as a sintered piece provided with at least one cutting edge (18), and comprising a cooling lubricant feed (24) which is guided axially through the main body (14) and has a cooling lubricant distributor (26) inserted into the cutting head (16) for diverting cooling lubricant into the region of the at least one cutting edge (18),
**characterized in that** a plurality of protruding spacers (30, 30') for keeping a gap clear with respect to the cooling lubricant distributor (26), as elements formed by primary shaping, are sintered on a support surface (28) of the cutting head (16), the cooling lubricant distributor (26) being held seated on the spacers (30, 30'), so that the gap (48) between the support surface (28) and the cooling lubricant distributor (26), which is defined by the spacers, remains clear for the passage of cooling lubricant, the spacers (30, 30') being designed as spherical, conical, wedge-shaped or curved geometric shaped bodies which taper toward a free bearing point facing away from the support surface (28).

2. Tool according to claim 1, **characterized in that** the cooling lubricant distributor (26) is clamped onto the spacers (30) by a screw connection without a fixed connection to the main body (14).

3. Tool according to claim 1 or 2, **characterized in that** the cooling lubricant distributor (26) is screwed into a centering sleeve (36) which can be moved against an abutment (44) of the cutting head (16).

4. Tool according to claim 3, **characterized in that** the centering sleeve (36) is guided in an axial hole in the main body (14) and, as part of the cooling lubricant feed (24), is provided with through-openings (40) for cooling lubricant.

5. Tool according to any of claims 1 to 4, **characterized in that** the support surface (28) is axially set back toward the main body (14) with respect to a front end portion (32) of the cutting head, the cooling lubricant distributor (26) being mounted within the cutting head (16).

6. Tool according to any of claims 1 to 5, **characterized in that** the cutting head (16) is in each case provided with a recess (34) which is assigned to the at least one cutting edge (18) and forms a radial passage for the cooling lubricant in the region of a flute (20) adjoining the cutting edge (18).

7. Tool according to any of claims 1 to 6, **characterized in that** the cooling lubricant distributor (26) is a mushroom-shaped turned part made of metal, in particular steel.

8. Tool according to any of claims 1 to 7, **characterized in that** a plurality of protruding spacers (30') for keeping a gap clear with respect to the main body (14), as elements formed by primary shaping, are sintered on a further support surface (28') of the cutting head (16).

9. Tool according to claim 8, **characterized in that** the spacers (30') protruding from the further support surface (28') protrude from a side of the cutting head (16) that faces the main body (14), the gap (48') kept clear by the spacers (30') forming a solder gap for a solder connection to the main body (14).

10. Tool according to any of claims 1 to 9, **characterized in that** at least three spacers (30, 30') are distributed in the circumferential direction around the longitudinal central axis (12).

11. Tool according to any of claims 1 to 10, **characterized in that** the spacers (30, 30') are arranged at equal or irregular angular distances from one another in the circumferential direction around the longitudinal central axis (12).

12. Tool according to any of claims 1 to 11, **characterized in that** the spacers (30, 30') have a height in the range of 0.1 to 2 mm, preferably 0.2 to 1 mm.

## Revendications

1. Outil d'enlèvement de copeaux, en particulier outil de friction pour l'usinage de précision d'un alésage ou outil de fraisage, comportant un corps formant base (14) présentant un axe central longitudinal (12) et pouvant être serré dans un porte-outil, une tête de coupe (16) apposée sur l'extrémité libre du corps formant base (14) et formée de manière primaire en tant que pièce frittée pourvue d'au moins un tranchant (18), et une alimentation en lubrifiant réfrigérant (24) traversant axialement le corps formant base (14), laquelle présente un distributeur de lubrifiant réfrigérant (26) inséré dans la tête de coupe (16) pour la déviation du lubrifiant réfrigérant dans la zone de l'au moins un tranchant (18), **caractérisé en ce que** plusieurs espaceurs (30, 30') en saillie sont frittés sur une surface d'appui (28) de la tête de coupe (16) en tant qu'éléments de formage primaire pour permettre le maintien dégagé d'un interstice par rapport au distributeur de lubrifiant réfrigérant (26), dans lequel le distributeur de lubrifiant réfrigérant (26) est maintenu en appui sur les espaceurs (30, 30') de sorte que l'interstice (48) défini par les espaceurs entre la surface d'appui (28) et le distributeur de lubrifiant réfrigérant (26) reste libre pour le passage du lubrifiant réfrigérant, dans lequel les espaceurs (30, 30') sont réalisés sous forme de corps moulés géométriques de forme bombée, conique, cunéiforme ou arquée, convergeant vers un emplacement de positionnement libre opposé à la surface d'appui (28).

2. Outil selon la revendication 1, **caractérisé en ce que** le distributeur de lubrifiant réfrigérant (26) est fixé par serrage sur les espaceurs (30) par un assemblage vissé sans liaison solidaire avec le corps formant base (14).

3. Outil selon la revendication 1 ou 2, **caractérisé en ce que** le distributeur de lubrifiant réfrigérant (26) est vissé dans une douille de centrage (36) mobile contre une butée (44) de la tête de coupe (16).

4. Outil selon la revendication 3, **caractérisé en ce que** la douille de centrage (36) est guidée dans un alésage axial du corps formant base (14) et est pourvue d'ouvertures de passage (40) pour le lubrifiant réfrigérant en tant que partie de l'alimentation en lubrifiant réfrigérant (24).

5. Outil selon l'une des revendications 1 à 4, **caractérisé en ce que** la surface d'appui (28) est en retrait axial par rapport à une partie frontale avant (32) de la tête de coupe vers le corps formant base (14), dans lequel le distributeur de lubrifiant réfrigérant (26) est positionné à l'intérieur de la tête de coupe (16).

6. Outil selon l'une des revendications 1 à 5, **caractérisé en ce que** la tête de coupe (16) est pourvue d'un évidement (34) respectivement associé à l'au moins un tranchant (18) et formant un passage radial pour le lubrifiant réfrigérant dans la zone d'une rainure de serrage (20) adjacente au tranchant (18).

7. Outil selon l'une des revendications 1 à 6, **caractérisé en ce que** le distributeur de lubrifiant réfrigérant (26) est une pièce rotative en forme de champignon formée en métal, en particulier en acier.

8. Outil selon l'une des revendications 1 à 7, **caractérisé en ce que** plusieurs espaceurs (30') en saillie sont frittés sur une autre surface d'appui (28') de la tête de coupe (16) en tant qu'éléments de formage primaire pour permettre le maintien dégagé d'un interstice par rapport au corps formant base (14).

9. Outil selon la revendication 8, **caractérisé en ce que** les espaceurs (30') en saillie de l'autre surface d'appui (28') font saillie d'un côté de la tête de coupe (16) tourné vers le corps formant base (14), dans lequel l'interstice (48') maintenu dégagé par les espaceurs (30') forme un interstice de brasage pour une liaison par brasage avec le corps formant base (14).

10. Outil selon l'une des revendications 1 à 9, **caractérisé en ce qu'au** moins trois espaceurs (30, 30') sont répartis dans la direction circonférentielle autour de l'axe central longitudinal (12).

11. Outil selon l'une des revendications 1 à 10, **caractérisé en ce que** les espaceurs (30, 30') sont disposés, vu dans la direction circonférentielle autour de l'axe central longitudinal (12), de manière espacée les uns des autres selon un angle, de manière identique ou irrégulière.

12. Outil selon l'une des revendications 1 à 11, **caractérisé en ce que** les espaceurs (30, 30') présentent une hauteur dans une plage allant de 0,1 à 2 mm, de préférence de 0,2 à 1 mm.
